# EUROPEAN PATENT SPECIFICATION

(11) **EP 2 857 163 B1**
(45) Date of publication and mention of the grant of the patent: **21.08.2019**
(21) Application number: 13800129.2
(22) Date of filing: 03.06.2013
(51) Int. Cl.: B28B 3/26, B23P 15/24

(54) **SPINNERET FOR MOLDING HONEYCOMB STRUCTURE AND MANUFACTURING METHOD THEREFOR**
SPINNDÜSE ZUR FORMUNG EINER WABENSTRUKTUR UND HERSTELLUNGSVERFAHREN DAFÜR
FILIÈRE POUR MOULER UNE STRUCTURE EN NID D'ABEILLES ET PROCÉDÉ DE FABRICATION DE CETTE FILIÈRE

(30) Priority: 04.06.2012 JP 2012126854
(43) Date of publication of application: 08.04.2015
(73) Proprietor: NGK Insulators, Ltd., Nagoya-shi, Aichi 467-8530 (JP)
(72) Inventor: KITAMURA, Kazumasa, Nagoya-shi, Aichi 467-8530 (JP); HOSOKAWA, Hirofumi, Nagoya-shi, Aichi 467-8530 (JP); NAGAE, Tomoki, Nagoya-shi, Aichi 467-8530 (JP)
(74) Representative: Mewburn Ellis LLP
(86) International application number: PCT/JP2013/065417
(87) International publication number: WO 2013/183612

(56) References cited:
- WO-A1-2009/119422
- BE-A3- 1 014 387
- JP-A- H0 584 726
- JP-A- H0 952 116
- JP-A- S5 638 208
- JP-A- S5 638 208
- JP-A- S60 222 203
- JP-A- S60 222 204
- JP-A- S62 142 607
- JP-A- S63 118 228
- JP-A- S63 118 228
- JP-A- 2010 076 133
- JP-A- 2010 076 133
- US-B1- 6 413 072

## Description

### Technical Field

The present invention relates to a die for forming a honeycomb structure and a method of manufacturing the same, and more particularly, to a die for forming a honeycomb structure and a method of manufacturing the same, capable of suppressing a distortion in the honeycomb structure during manufacturing of the honeycomb structure.

### Background Art

Heretofore, a die for forming a honeycomb structure has been used as an extrusion die for manufacturing a ceramic honeycomb structure by extruding a ceramic raw material. In the die for forming a honeycomb structure, for example, a second plate-shaped portion having a plurality of back holes opened on both sides and a first plate-shaped portion having slits communicating with the back holes formed in the second plate-shaped portion are stacked. In such a die for forming a honeycomb structure, for example, a first plate-shaped member and a second plate-shaped member having back holes are bonded through a hot pressing process, and slits communicating with the back holes are formed in the first plate-shaped member (for example, refer to Patent Document 1).

Meanwhile, in the aforementioned die for forming a honeycomb structure, a width of the slit is much narrower than a diameter of the back hole. For this reason, as a ceramic raw material is introduced into the back holes, a pressure inside the back holes increases, so that a stress may be concentrated on the slits. Therefore, the slits may be easily worn or deformed disadvantageously.

For such problems, a die for forming a honeycomb structure, capable of suppressing wear or deformation of the slit has been discussed (for example, refer to Patent Document 2).

The die discussed in Patent document 2 is a die having a forming portion having a forming trench (slit) formed on a front side and a rectangular cross-sectional aperture formed on a back side and a die base portion having a through-hole portion. The forming portion of the die is formed of wear-resistant alloy.

### Citation list

### Patent Documents

Patent Document 1: JP-A-2006-51682
Patent Document 2: JP-B-6-22806

US 6,413,072 B1 describes an extrusion die having an inlet face and an outlet face comprising: at least one batch feed hole of a given diameter communicating with said inlet face for receiving batch material, said at least one batch feed hole having an exit end intermediate said inlet and outlet faces, a stressor component having a stressor hole portion co-axial with said at least one batch feed hole and a diameter less than the given diameter of said at least one batch feed hole positioned adjacent said exit end of said at least one batch feed hole and having a stressor exit end also intermediate said inlet and outlet faces, a feedhole extension or transition section of larger diameter than said stressor hole section and co-axial with said at least one batch feed hole positioned adjacent to said stressor exit end for restoring batch material flow to an original condition; and discharge means communicating with said outlet face for discharging batch material from the die.

BE 1 014 387 A3 describes a metal mold for molding a hexagonal honeycomb structure, having feed holes for feeding a material, pool grooves formed in the shape of a triangular lattice and communicated with the feed holes, and slit grooves formed in the shape of a hexagonal lattice and communicated with the pool grooves. Each hexagonal lattice of the slit grooves is so formed as to come into agreement with a hexagon shaped by combining six triangular lattices of the pool grooves; and a method of making such a mold.

JP S63 118228 A and JP 2010 076133 A describe further examples of molds or dies for extrusion forming of honeycomb structures.

### Summary of the Invention

### Problem to be Solved by the Invention

In the aforementioned die discussed in Patent document 2, when a ceramic raw material is introduced from the through-hole portion (back hole), the ceramic raw material is introduced into the slit through an aperture (cavity) formed of an wear-resistant material. For this reason, it is possible to solve a problem of wear or deformation. In particular, if the die base portion of the die having a through-hole portion is formed of stainless steel, and the forming portion having an aperture and a slit is formed of cemented carbide, it is possible to suppress wear or deformation.

Meanwhile, in the die discussed in Patent document 2, a diameter of the circular cross-sectional shape of the through-hole portion is longer than one side of the rectangular cross-sectional shape of the aperture and is shorter than a diagonal line of the rectangular cross-sectional shape of the aperture. In addition, the center of the aperture and the center of the through-hole portion are nearly concentric. When the aperture has a rectangular (cross-sectional) shape, the through-hole portion has a circular (cross-sectional) shape, and the shapes satisfy the aforementioned condition, it can be said that the aperture and the through-hole portion are arranged in nearly the same position with nearly the same size. Supposing that the aperture and the through-hole portion are arranged in nearly the same position with nearly the same size in this manner, the aperture and the through-hole portion may be deviated from each other when a forming portion (material of the forming portion) and a die base portion (material of the die base portion) are bonded to manufacture the die. Here, the "deviated state" refers to a state that the center positions do not match, and the outer circumference (outer edge) of the open end of the aperture and the outer circumference (outer edge) of the open end of the through-hole portion intersect with each other. In addition, the deviated state also includes a state that the open end of the aperture and the open end of the through-hole portion are not overlapped at all. If the honeycomb structure is formed using the die in which the open end of the aperture and the open end of the through-hole portion are deviated from each other, new problem that a distortion may be generated in the honeycomb structure, formability may be degraded and the like, occurs. This is because the open end of the aperture and the open end of the through-hole portion are deviated from each other, so that a ceramic raw material is not sufficiently introduced into the slit, or a pressure is not uniformly applied to a ceramic raw material when it is extruded from each slit. In addition, even when the open end of the aperture and the open end of the through-hole portion are slightly deviated, formability is influenced, so that the same problem occurs.

Therefore, it is necessary to suppress a distortion in the honeycomb structure and improve formability when the honeycomb structure is formed.

The present invention has been made in view of the aforementioned problems. In the die for forming a honeycomb structure according to the present invention, the diameter of the cavity is different from the diameter of the back hole. In addition, according to the present invention, the open end of the cavity on the first bonded surface is arranged inside the open end of the back hole on the second bonded surface. For this reason, according to the present invention, it is possible to suppress a distortion in the honeycomb structure when a honeycomb structure is formed, and provide a die for forming a honeycomb structure capable of improving formability.

### Means for Solving the Problem

According to the present invention, there are provided a die for forming a honeycomb structure and a method of manufacturing the same as follows.
[1] According to an aspect of the present invention, there is provided a die for forming a honeycomb structure including: a second plate-shaped portion having a second bonded surface, where a back hole for introducing a forming raw material is formed; and a first plate-shaped portion that has a first bonded surface and is formed of tungsten carbide based cemented carbide, where a cavity communicating with the back hole is formed in the first bonded surface side, and a slit communicating with the cavity to form a forming raw material is formed, wherein the second plate-shaped portion is formed of a material containing at least one selected from a group consisting of iron, steel, aluminum alloy, copper alloy, titanium alloy, and nickel alloy, the first plate-shaped portion is arranged on the second plate-shaped portion such that the first bonded surface comes into contact with the second bonded surface, an open end of the cavity on the first bonded surface has a diameter different from that of an open end of the back hole on the second bonded surface and a bottom portion as a head edge of the cavity has a flat shape on a cross section perpendicular to a top surface of the first plate-shaped portion at an end opposite to the open end of the cavity such that the flat shape of the bottom portion extends to the cavity sidewall and is parallel to the first bonded surface of the first plate-shaped portion, and the open end of the cavity on the first bonded surface is arranged inside the open end of the back hole on the second bonded surface; wherein the diameter of the open end of the back hole on the second bonded surface is larger than the diameter of the open end of the cavity on the first bonded surface, and the diameter of the open end of the back hole on the second bonded surface is 1.01 to 1.50 times of the diameter of the open end of the cavity on the first bonded surface.
[2] In the die for forming a honeycomb structure described in [1], the cavity may have a depth of 0.1 to 90 mm.
[3] The die for forming a honeycomb structure described in any one of [1] or [2] may further include a buffer portion which is a space that is formed along an end of the slit in the first bonded surface side of the first plate-shaped portion, communicates with the slit, and has a width larger than that of the slit.
[4] According to another aspect of the present invention, there is provided a method of manufacturing a die for forming a honeycomb structure, including: forming a plurality of back holes in a second plate-shaped member formed of a material containing at least one selected from a group consisting of iron, steel, aluminum alloy, copper alloy, titanium alloy, and nickel alloy; forming a plurality of cavities in a first bonded surface of a first plate-shaped member such that each cavity has an open end on the first bonded surface and a bottom portion as a head edge of the cavity has a flat shape on a cross section perpendicular to a top surface of the first plate-shaped member at an end opposite to the open end of the cavity, wherein the flat shape of the bottom portion extends to the cavity sidewall and is parallel to the first bonded surface of the first plate-shaped member, and the plurality of cavities have a diameter different from that of the back holes and communicate with the back holes when the second plate-shaped member is bonded to the first bonded surface of the first plate-shaped member formed of tungsten carbide based cemented carbide; stacking the first plate-shaped member and the second plate-shaped member and bonding the first plate-shaped member and the second plate-shaped member while a second bonded surface which is one surface of the second plate-shaped member having the back holes faces the first bonded surface of the first plate-shaped member having the cavities; and forming slits communicating with the cavities from a surface side of the first plate-shaped member to manufacture a die for forming a honeycomb structure; wherein the diameter of the open end of the back hole on the second bonded surface is larger than the diameter of the open end of the cavity on the first bonded surface, and the diameter of the open end of the back hole on the second bonded surface is 1.01 to 1.50 times of the diameter of the open end of the cavity on the first bonded surface.

### Effect of the Invention

The die for forming a honeycomb structure according to the present invention includes a second plate-shaped portion and a first plate-shaped portion. The second plate-shaped portion is formed of a material containing at least one selected from a group consisting of iron, steel, aluminum alloy, copper alloy, titanium alloy, and nickel alloy. In addition, the second plate-shaped portion has a second bonded surface where back holes for introducing a formation raw material are formed. The first plate-shaped portion is formed of tungsten carbide based cemented carbide. Furthermore, the first plate-shaped portion has a first bonded surface and slits for forming a forming raw material by communicating with the back holes, and cavities communicating with the back holes and the slits are formed in the first bonded surface side. In addition, the first plate-shaped portion is arranged on the second plate-shaped portion such that the first bonded surface comes into contact with the second bonded surface. Furthermore, the open end of the cavity on the first bonded surface has a diameter different from that of the open end of the back hole on the second bonded surface. Moreover, the open end of the cavity on the first bonded surface is arranged inside the open end of the back hole on the second bonded surface. Since the die for forming a honeycomb structure according to the present invention has the aforementioned relationship between the back hole and the cavity in this manner, it is possible to suppress a distortion of the formed honeycomb structure when the honeycomb structure is formed, and improve formability.

A method of manufacturing a die for forming a honeycomb structure according to the present invention includes following steps. Specifically, a plurality of back holes are formed in a second plate-shaped member formed of a material containing at least one selected from a group consisting of iron, steel, aluminum alloy, copper alloy, titanium alloy, and nickel alloy. In addition, a plurality of cavities that have a diameter different from that of the back holes and communicate with the back holes when the second plate-shaped member is bonded to a first bonded surface which is one surface of the first plate-shaped member formed of tungsten carbide based cemented carbide. In addition, the first plate-shaped member and the second plate-shaped member are stacked and bonded to each other while a second bonded surface which is one surface of the second plate-shaped member having the back holes faces the first bonded surface of the first plate-shaped member having the cavities. Furthermore, slits communicating with the cavities from a surface side of the first plate-shaped member are formed to manufacture a die for forming a honeycomb structure. In this manner, in the method of manufacturing the die for forming a honeycomb structure according to the present invention, the cavity formed in the first plate-shaped member has a diameter different from that of the back hole formed in the second plate-shaped portion. For this reason, it is possible to obtain a die for forming a honeycomb structure having excellent formability.

### Brief Description of the Drawings

FIG. 1 is a perspective view schematically showing a die for forming a honeycomb structure according to an embodiment of the present invention as seen from a first plate-shaped portion side where slits are formed;
FIG. 2 is a perspective view schematically showing a die for forming a honeycomb structure according to an embodiment of the present invention as seen from a second plate-shaped portion where back holes are formed;
FIG. 3 is an enlarged plan view partially showing a surface of the first plate-shaped portion side of the die for forming a honeycomb structure of FIG. 1;
FIG. 4A is a schematic diagram showing a cross section taken along a line A-A' of the die for forming a honeycomb structure of FIG. 3;
FIG. 4B is a schematic diagram showing a cross section in parallel with a thickness direction of a die for forming a honeycomb structure in a state that open end of the back hole on a second bonded surface are arranged in the inside of the open end of the cavity on a first bonded surface;
FIG. 5 is a cross-sectional view partially showing a cross section perpendicular to the slit in a die for forming a honeycomb structure according to further another embodiment of the present invention;
FIG. 6 is a cross-sectional view partially showing a cross section perpendicular to the slit in a die for forming a honeycomb structure according to still another embodiment of the present invention;
FIG. 7 is a cross-sectional view partially illustrating a cross section perpendicular to the slit in a die for forming a honeycomb structure according to still another embodiment of the present invention;
FIG. 8 is a cross-sectional view partially showing a cross section perpendicular to a surface of the first plate-shaped portion in a die for forming a honeycomb structure not according to the present invention;
FIG. 9 is a cross-sectional view partially showing a cross section perpendicular to a surface of the first plate-shaped portion in a die for forming a honeycomb structure not according to the present invention;
FIG. 10 is a cross-sectional view partially showing a cross section perpendicular to the slit in a die for forming a honeycomb structure according to still another embodiment of the present invention;
FIG. 11 is a cross-sectional view partially showing a cross section perpendicular to the slit in a die for forming a honeycomb structure according to still another embodiment of the present invention;
FIG. 12 is a cross-sectional view partially showing a cross section perpendicular to the slit in a die for forming a honeycomb structure according to still another embodiment of the present invention; and
FIG. 13 is a cross-sectional view partially showing a cross section perpendicular to the slit in a die for forming a honeycomb structure according to still another embodiment of the present invention.

### Mode for Carrying out the Invention

Hereinafter, embodiments of the present invention will be described in detail with reference to the accompanying drawings.

### (1) Die for Forming Honeycomb Structure:

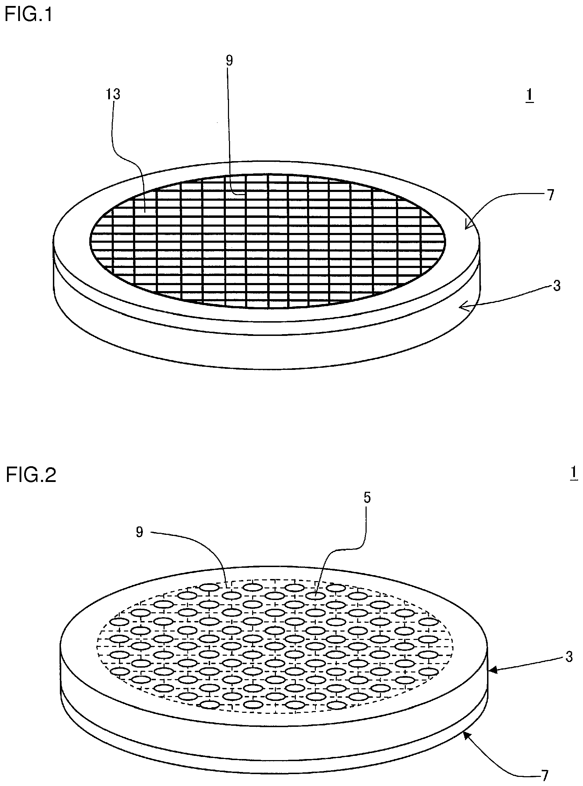

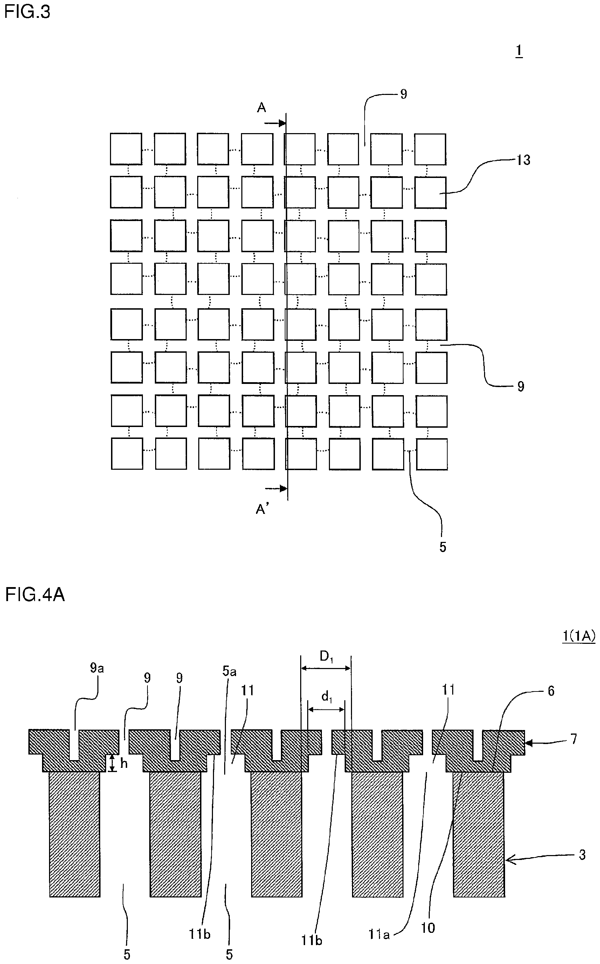

A die for forming a honeycomb structure according to an embodiment of the present invention will be described. FIG. 1 is a perspective view schematically showing a die for forming a honeycomb structure according to an embodiment of the present invention as seen from a first plate-shaped portion where slits are formed. FIG. 2 is a perspective view schematically showing a die for forming a honeycomb structure according to an embodiment of the present invention as seen from a second plate-shaped portion side where back holes are formed. FIG. 3 is an enlarged plan view partially showing a surface of the first plate-shaped portion side of the die for forming a honeycomb structure of FIG. 1. FIG. 4A is a schematic diagram showing a cross section taken along a line A-A' in the die for forming a honeycomb structure of FIG. 3. The die for forming a honeycomb structure of FIG. 4A has a state that an open end of a cavity on a first bonded surface is arranged inside an open end of a back hole on a second bonded surface.

As shown in FIGS. 1 to 4A, a die for forming a honeycomb structure 1 according to this embodiment includes a second plate-shaped portion 3 and a first plate-shaped portion 7 formed of tungsten carbide based cemented carbide. The second plate-shaped portion 3 is formed of a material containing at least one selected from a group consisting of iron, steel, aluminum alloy, copper alloy, titanium alloy, and nickel alloy. The second plate-shaped portion 3 has a second bonded surface 6 where a back hole 5 for introducing a forming raw material is formed. The first plate-shaped portion 7 has a first bonded surface 10 where a slit 9 communicating with the back hole 5 for forming the forming raw material is formed, and a cavity 11 communicating with the back hole 5 and the slit 9 is formed in the first bonded surface 10 side. The slit 9 directly communicates with the cavity 11. That is, it can be said that the slit 9 communicates with the back hole 5 through the cavity 11. The first plate-shaped portion 7 is arranged in the second plate-shaped portion 3 such that the first bonded surface 10 comes into contact with the second bonded surface 6. A diameter of the open end of the cavity on the first bonded surface is different from a diameter of the open end of the back hole on the second bonded surface. In addition, the diameter of the open end of the cavity on the first bonded surface is smaller than the diameter of the open end of the back hole on the second bonded surface. Furthermore, an open end 11a of the cavity 11 on the first bonded surface 10 is arranged inside an open end 5a of the back hole 5 on the second bonded surface 6. By configuring the die for forming a honeycomb structure 1 (1A) in this manner, it is possible to improve formability of the formed honeycomb structure. The phrase "the open end 11a of the cavity 11 is arranged inside the open end 5a of the back hole 5" means that the back hole 5 having a large opening diameter and the cavity 11 having a small opening diameter communicate with each other, and an outer circumference (outer edge) of the open end of the back hole 5 and an outer circumference (outer edge) of the open end of the cavity 11 do not intersect with each other. It is noted that a state that the outer circumference (outer edge) of the open end of the cavity 11 is inscribed with the outer circumference (outer edge) of the open end of the back hole 5 is included in the meaning of the phrase "the open end 11a of the cavity 11 is arranged inside the open end 5a of the back hole 5."

A thickness of the die for forming a honeycomb structure according to this embodiment is preferably set to 5 to 100 mm, but not particularly limited thereto. If the thickness of the die is thinner than 5 mm, the die may be broken during the formation. If the thickness of the die is thicker than 100 mm, a pressure loss may become significant during the formation of the honeycomb structure, so that it may be difficult to perform formation.

### (1-1) Second Plate-shaped Portion

The second plate-shaped portion 3 is formed of a material containing at least one selected from a group consisting of iron, steel, aluminum alloy, copper alloy, titanium alloy, and nickel alloy. The steel is a material containing at least one selected from a group consisting of stainless steel, die steel, and high-speed steel. Out of such materials, steel is preferably selected as a material of the second plate-shaped portion 3. More preferably, stainless steel is selected. It is noted that the "material containing at least one selected from a group consisting of iron, steel, aluminum alloy, copper alloy, titanium alloy, and nickel alloy" may be referred to herein as "free cutting material." The "free cutting material" is a material easily grindable compared to tungsten carbide based cemented carbide. The second plate-shaped portion 3 is less influenced by wear, compared to the first plate-shaped portion 7, because no slit is formed. Since the second plate-shaped portion 3 is formed of free cutting material, it has excellent workability, compared to tungsten carbide based cemented carbide. In addition, since a cost of the free cutting material is lower than that of tungsten carbide based cemented carbide, it is possible to lower the manufacturing cost.

As the aforementioned "stainless steel" as a kind of the material of the second plate-shaped portion 3, stainless steel well known in the art may be used. For example, the stainless steel may include SUS304, SUS303, and the like.

The second plate-shaped portion 3 may have a desired size depending on a utilization purpose without any particular limitation. It is noted that, if the second plate-shaped portion 3 has a disk shape, a diameter of the disk (diameters of one side and the other side) is preferably set to 30 to 500 mm.

A thickness of the second plate-shaped portion 3 may be determined appropriately depending on a utilization purpose considering a shape of the slit or a shape of the back hole without any particular limitation.

### (Back Hole)

The back holes 5 for introducing a forming raw material are formed in the second plate-shaped portion 3. The "back hole 5" is a through hole for introducing a forming raw material (the hole opened to both sides of the second plate-shaped portion 3). When a honeycomb structure is formed using the die for forming a honeycomb structure 1, the forming raw material of the honeycomb structure is introduced from the back holes 5.

The shape of the back hole 5 is not particularly limited as long as it can guide the introduced forming raw material into the cavity 11 and the slit 9. For example, a shape of the back hole in the "cross section perpendicular to a direction where the forming raw material flows (the thickness direction of the second plate-shaped portion)" of the back hole is preferably circular. In addition, a diameter of the open end of the back hole 5 is preferably set to 0.5 to 5.0 mm, and more preferably, 0.8 to 3.0 mm. Such the back hole 5 may be formed, for example, using various machining methods such as electrochemical machining (ECM), electrical discharge machining (EDM), laser machining, and mechanical machining such as drilling. Out of these methods, the electrochemical machining (ECM) is preferably employed because the back holes 5 can be formed efficiently and accurately. A space of the back hole preferably has a cylindrical shape. In this case, a diameter (diameter of the back hole) on the "cross section perpendicular to a direction where the forming raw material flows (thickness direction of the second plate-shaped portion)" of the back hole becomes constant. In this case, the diameter of the back hole is equal to the "diameter of the open end of the back hole on the second bonded surface." Furthermore, the number of the back holes may be appropriately determined depending on a shape and the like of the honeycomb structure to be manufactured without any particular limitation.

### (Second Bonded Surface)

The second plate-shaped portion 3 has the second bonded surface 6. As shown in FIG. 4A, the second bonded surface 6 is a surface of the second plate-shaped portion 3 bonded to (coming into contact with) the first plate-shaped portion 7.

### (1-2) First Plate-shaped Portion

The first plate-shaped portion 7 is a plate-shaped member formed of tungsten carbide based cemented carbide. A width of the slit 9 is much narrower than the diameter of the back hole 5. For this reason, when extrusion is performed for the forming raw material, a pressure inside the back hole 5 increases, so that a stress is concentrated on the slit 9, or a defect such as wear or deformation may easily occur. Therefore, the first plate-shaped portion 7 is formed of tungsten carbide based cemented carbide having a high wear resistance.

The "tungsten carbide based cemented carbide (cemented carbide)" refers to alloy obtained by sintering tungsten carbide and a binder. The binder is metal containing at least one selected from a group consisting of cobalt (Co), iron (Fe), nickel (Ni), titanium (Ti), and chromium (Cr). The tungsten carbide based cemented carbide has an especially excellent wear resistance or mechanical strength.

The first plate-shaped portion 7 may have a desired size depending on a utilization purpose without any particular limitation. However, when the first plate-shaped portion 7 has a disk shape, a diameter of the disk is preferably set to 30 to 500 mm. When the first plate-shaped portion 7 and the second plate-shaped portion 3 have a disk shape, a diameter of the first plate-shaped portion 7 is preferably set to 90 to 100% of the diameter of the second plate-shaped member 3.

It is noted that a thickness of the first plate-shaped portion 7 is preferably set to 0.6 to 95 mm, more preferably 0.6 to 30 mm, and particularly preferably 1.0 to 20 mm. In addition, the thickness of the first plate-shaped portion 7 is preferably set to 0.05 to 5 times of the thickness of the second plate-shaped portion 3.

### (Slit)

In the first plate-shaped portion 7, slits 9 for forming a forming raw material are formed to communicate with the cavities 11. The slit is a crevice (notch) formed in the first plate-shaped portion 7. The forming raw material introduced from the back hole 5 enters the slit 9 inside the die for forming a honeycomb structure and is then extruded from the open end of the slit 9, so that a honeycomb-shaped formed body is formed.

An area where the slit is formed on the first plate-shaped portion 7 or a formation pattern of the slit may be appropriately determined depending on a utilization purpose without any particular limitation. For example, the formation pattern of the slit may have a polygonal shape such as triangle, rectangle, pentagon, hexagon, and octagon or a circular shape, or may be a combinational pattern having a plurality of shapes including a polygonal shape and a circular shape on a cross section perpendicular to a direction where the forming raw material is extruded (flows). For example, in the die for forming a honeycomb structure 1 shown in FIGS. 1 to 3, a formation pattern of the slit 9 has a rectangular shape on the cross section perpendicular to a direction where the forming raw material is extruded.

A width of the slit may be appropriately determined depending on a shape of the honeycomb structure to be formed. For example, when a die for forming a honeycomb structure for extruding a ceramic honeycomb structure for a general exhaust gas filter or a catalyst carrier is manufactured, the slit preferably has a width of 0.05 to 1 mm, and more preferably 0.06 to 0.5 mm. A depth of the slit may be set so that it can communicate with the cavity. The slit preferably has, for example, a depth of 0.5 to 10 mm.

### (First Bonded Surface)

The first plate-shaped portion 7 has the first bonded surface 10. As shown in FIG. 4A, the first bonded surface 10 is a surface of the first plate-shaped portion 7 bonded to (coming into contact with) the second plate-shaped portion 3.

### (Cavity)

The "cavity 11" is formed in the first plate-shaped portion 7. The "cavity 11" is formed to communicate with the back hole 5 formed in the second plate-shaped portion 3 and the slit 9 formed in the first plate-shaped portion 7. In addition, the "cavity 11" is a hollow formed in the "first bonded surface 10" of the first plate-shaped portion 7. That is, the cavity 11 is formed to face a surface (surface of the first plate-shaped portion 7) opposite to the first bonded surface 10 from the first bonded surface 10 side. It is noted that the "cavity 11" does not reach a surface of the first plate-shaped portion 7 as shown in FIG. 4A. That is, although the "cavity 11" communicates with the slit, the cavity 11 itself does not serve as a through hole. Therefore, the "cavity 11" has a bottom portion 11b which is a leading edge (bottom portion) of the hole inside of the first plate-shaped portion 7. Since the "cavity 11" is formed in this manner, the forming raw material introduced from the back hole 5 formed in the second plate-shaped portion 3 passes through the "cavity 11" and enters the slit 9. In addition, the forming raw material is extruded from an open end 9a of the slit to form a honeycomb formed body (honeycomb structure) .

The cavity 11 preferably has a depth h of 0.1 to 90 mm (refer to FIG. 4A), and more preferably 0.5 to 20 mm. In this manner, by setting the depth h of the cavity 11 to this range, it is possible to improve formability. If the depth h of the cavity is smaller than 0.1 mm, a strength of the first plate-shaped member may be degraded when the forming raw material is extruded. If the depth h of the cavity is larger than 90 mm, it is difficult to form a cavity by machining the first plate-shaped member when the die for forming a honeycomb structure according to this embodiment is manufactured. Here, the "depth h of the cavity 11" refers to a distance from the first bonded surface of the first plate-shaped portion to the bottom portion 11b of the cavity as shown in FIG. 4A.

A diameter of the open end of the cavity 11 is preferably set to 0.5 to 5.0 mm, and more preferably 0.8 to 3.0 mm. Such a cavity 11 may be formed, for example, using various machining methods such as electrochemical machining (ECM), electrical discharge machining (EDM), laser machining, and mechanical machining such as drilling. As a method of forming the cavity 11, the electrochemical machining (ECM) is preferably employed out of these methods because the cavity 11 can be formed efficiently and accurately. A space of the cavity is preferably cylindrical. In this case, a diameter (diameter of the cavity) on the "cross section perpendicular to a direction where the forming raw material flows (thickness direction of the first plate-shaped portion) " in the cavity becomes constant. In addition, in this case, the diameter of the cavity 11 becomes equal to the "diameter of the open end of the cavity on the first bonded surface." Furthermore, the number of the cavities 11 is preferably equal to the number of the back holes.

### (1-3) Relationship between Open End of Cavity and Open End of Back Hole

As shown in FIG. 4A, in the die 1 (1A) for forming a honeycomb structure 1 (1A) according to this embodiment, a diameter d₁ of the open end 11a of the cavity on the first bonded surface 10 is different from a diameter D₁ of the open end 5a of the back hole on the second bonded surface 6. In addition, as shown in FIG. 4A, in the die for forming a honeycomb structure according to this embodiment, the diameter d₁ of the open end of the cavity 11 on the first bonded surface is formed to be smaller than the diameter D₁ of the open end of the back hole 5 on the second bonded surface. In addition, the open end 11a of the cavity 11 of the first bonded surface 10 is arranged inside the open end 5a of the back hole 5 on the second bonded surface 6.

The "open end 11a of the cavity on the first bonded surface" is an inlet portion of the hollow (cavity) opened on the first bonded surface 10. It is noted that the diameter d₁ of the open end 11a of the cavity is preferably equal to the diameter of the bottom portion 11b of the cavity. Similarly, the "open end 5a of the back hole on the second bonded surface" is an outlet portion (outlet portion of the forming raw material) opened on the second bonded surface 6 in the second bonded surface 6 side. A ceramic raw material is supplied to the cavity as soon as it passes through the outlet portion.

In the die for forming a honeycomb structure according to this embodiment, the open end 11a of the cavity on the first bonded surface 10 is arranged inside the open end 5a of the back hole on the second bonded surface 6. When the open end 11a of the cavity is arranged inside the open end 5a of the back hole in this manner, it is possible to prevent hindrance of "a stable (smooth) flow of the ceramic raw material from the back hole 5 to the slit 9." That is, a deviation of the flow of the forming raw material inside the cavity 11 is suppressed, and the forming raw material is introduced into the slit with the same pressure. As a result, it is possible to prevent a distortion of the honeycomb structure when the honeycomb structure is formed. That is, it is possible to obtain a die for forming a honeycomb structure capable of forming a honeycomb structure with excellent formability.

In the die for forming a honeycomb structure according to this embodiment, the "diameter D₁ of the open end 5a of the back hole on the second bonded surface 6" is set to 1.01 to 1.50 times of the "diameter d₁ of the open end 11a of the cavity on the first bonded surface 10." As a result, it is possible to improve formability when a honeycomb structured formed body (honeycomb structure) is formed. If the ratio of the diameter is smaller than 1.01, the open end of the cavity and the open end of the back hole may be deviated from each other when the first plate-shaped portion and the second plate-shaped portion are bonded to each other during the manufacturing of the die for forming a honeycomb structure. If the open end of the cavity and the open end of the back hole are deviated from each other, the honeycomb structure obtained in forming a honeycomb structure may be easily deformed. If the ratio of the diameter is larger than 1.50 times, it may be difficult to form a desired formed structure by coupling the back holes to each other. The open end of the cavity and the open end of the back hole preferably have the same shape and different sizes although they are not particularly limited. As a result, it is possible to provide a more uniform flow of the forming raw material. In addition, the open end of the cavity and the open end of the back hole preferably have a circular shape. If they have a circular shape, it is possible to provide a more uniform flow of the forming raw material.

The ceramic honeycomb structure extruded using the die for forming a honeycomb structure 1 (1A) according to this embodiment is a ceramic honeycomb structure having a porous partition wall defining and forming a plurality of cells extending in a fluid flow direction. The ceramic raw material used in the manufacturing of the ceramic honeycomb structure using the die for forming a honeycomb structure 1 (1A) according to this embodiment is a raw material obtained by mixing and kneading water, a binder, a pore former, and the like with ceramic powder.

### (1-4) Another Die for Forming Honeycomb Structure (Not of the Invention)

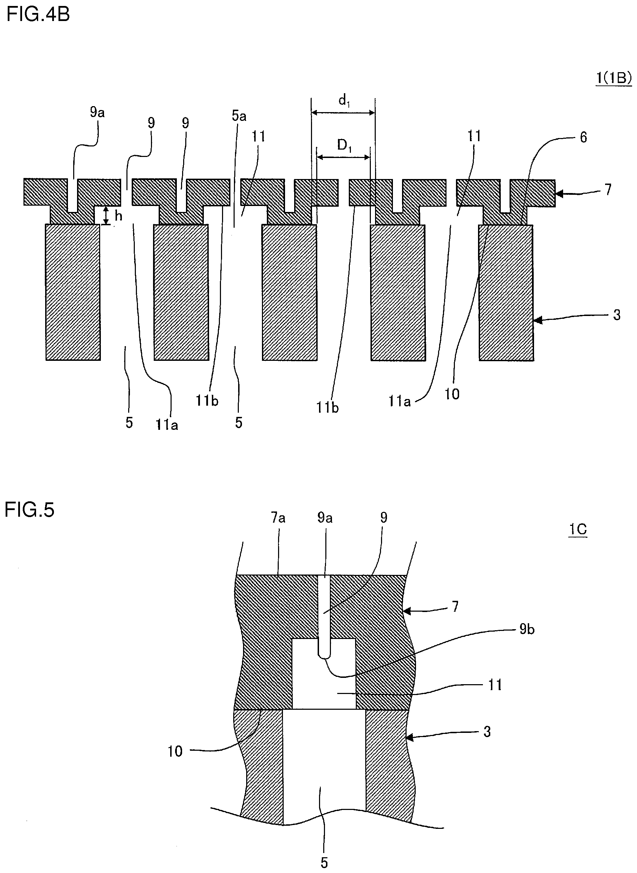

Next, a description will be made for a different die for forming a honeycomb structure, which is not according to the present invention. The die for forming a honeycomb structure according to this is configured as described below. Specifically, as shown in FIG. 4B, in the die for forming a honeycomb structure according to an embodiment of the present invention (refer to FIG. 4A), the open end 5a of the back hole 5 on the second bonded surface 6 is arranged inside the open end 11a of the cavity 11 on the first bonded surface 10. In the present die for forming a honeycomb structure, not according to the invention, the open end 5a of the back hole 5 on the second bonded surface 6 is smaller than the open end 11a of the cavity 11 on the first bonded surface 10. The phrase "the open end 5a of the back hole 5 is arranged inside the open end 11a of the cavity 11" means that the back hole 5 having a small opening diameter and the cavity 11 having a large opening diameter communicate with each other, and the outer circumference (outer edge) of the open end of the back hole 5 and the outer circumference (outer edge) of the open end of the cavity 11 do not intersect with each other. It is noted that a state that the outer circumference (outer edge) of the open end of the back hole 5 is inscribed with the outer circumference (outer edge) of the open end of the cavity 11 is included in the meaning of the phrase "the open end 5a of the back hole 5 is arranged inside the open end 11a of the cavity 11." FIG. 4B is a schematic diagram showing a "cross section in parallel with the thickness direction" of the die, in which the open end of the back hole on the second bonded surface is arranged inside the open end of the cavity on the first bonded surface.

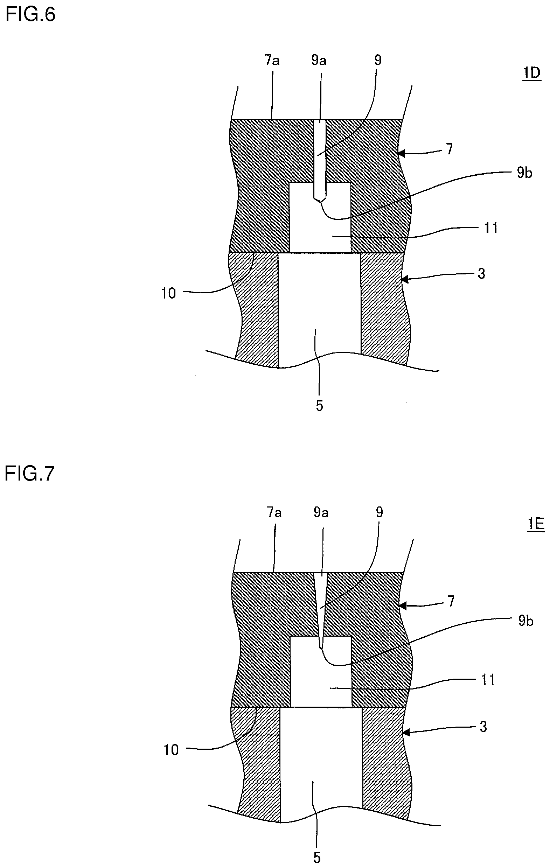

In die for forming a honeycomb structure according to the present invention, as shown in FIG. 5, "a bottom portion 9b of the slit preferably has an outwardly convex curved shape on the cross section perpendicular to the slit 9." Herein, the "cross section perpendicular to the slit 9" means a cross section perpendicular to the slit 9 in parallel with the depth direction of the slit 9 (directed from the surface of the first plate-shaped portion to the inside). The bottom portion 9b of the slit is an end of the slit 9 in the "first bonded surface 10 side of the first plate-shaped portion 7" on the cross section perpendicular to the slit 9. It is noted that an end of the slit 9 in a "surface 7a side of the first plate-shaped portion 7" corresponds to the open end 9a of the slit 9. In addition, in the die for forming a honeycomb structure according to the present invention, it is preferable that the "bottom portion 9b of the slit preferably have an outwardly convex V-shape on the cross section perpendicular to the slit 9" as shown in FIG. 6. In addition, in the die for forming a honeycomb structure according to the present invention, it is preferable that "the bottom portion of the slit have a "flat shape (straight shape) of which corners are straightly chamfered (C-chamfered shape)" on the cross section perpendicular to the slit." Furthermore, in the die for forming a honeycomb structure according to the present invention, it is preferable that "the slit 9 have a tapered shape narrowed from the open end 9a to the bottom portion 9b of the slit on the cross section perpendicular to the slit 9" as shown in FIG. 7. The slit may have various shapes as described above. FIG. 5 is a cross-sectional view partially showing the cross section perpendicular to the slit 9 in the die for forming a honeycomb structure according to further another embodiment of the present invention (die for forming a honeycomb structure 1C). FIG. 6 is a cross-sectional view partially showing the cross section perpendicular to the slit 9 in the die for forming a honeycomb structure according to still another embodiment of the present invention (die for forming a honeycomb structure 1D). FIG. 7 is a cross-sectional view partially showing the cross section perpendicular to the slit 9 in the die for forming a honeycomb structure according to still another embodiment of the present invention (die for forming a honeycomb structure 1E).

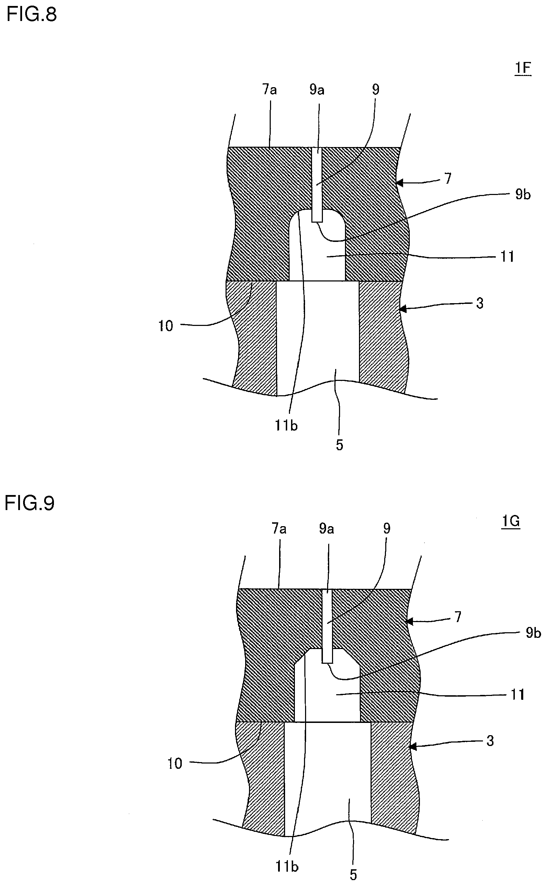

In the die for forming a honeycomb structure not according to the present invention, it is preferable that the bottom portion 11b of the cavity 11 have an outwardly convex curved shape on the cross section perpendicular to the surface 7a of the first plate-shaped portion 7 as shown in FIG. 8. In addition, in the die for forming a honeycomb structure not according to the present invention, it is preferable that "the bottom portion of the cavity have a 'flat shape (straight shape) of which corners are formed in an outwardly convex curved shape' on the cross section perpendicular to the surface of the first plate-shaped portion." Furthermore, in the die for forming a honeycomb structure not according to the present invention, the bottom portion 11b of the cavity 11 preferably has one of the shapes described below as shown in FIG. 9. Specifically, it is preferable that the bottom portion 11b of the cavity 11 have a "'flat shape (straight shape) of which corners are straightly chamfered (C-chamfered)' on the cross section perpendicular to the surface 7a of the first plate-shaped portion 7." The bottom portion 11b of the cavity 11 may have various shapes as described above. It is noted that, in the die for forming a honeycomb structures 1F and 1G shown in FIGS. 8 and 9, the bottom portion 9b of the slit 9 has a flat shape (straight shape) on the cross section perpendicular to the slit 9. This may also be referred to as the bottom portion 9b of the slit 9 has a shape of which corners have right angle on the cross section perpendicular to the slit 9. FIG. 8 is a cross-sectional view partially showing a cross section perpendicular to the surface 7a of the first plate-shaped portion 7 in the die for forming a honeycomb structure not according to the present invention (die for forming a honeycomb structure 1F). FIG. 9 is a cross-sectional view partially showing a cross section perpendicular to the surface 7a of the first plate-shaped portion 7 in the die for forming a honeycomb structure not according to the present invention (the die for forming a honeycomb structure 1G).

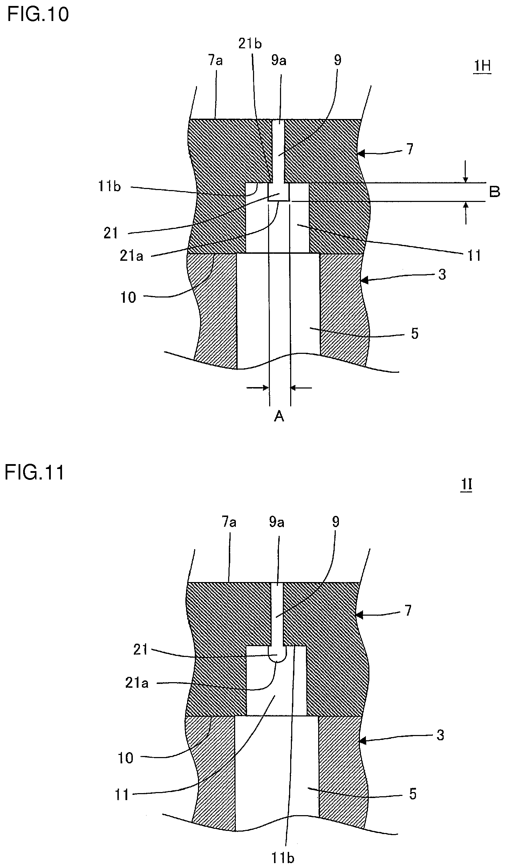

In the die for forming a honeycomb structure according to the present invention, it is preferable that a buffer portion be provided as "a space that is formed along the "end of the slit in the first bonded surface side of the first plate-shaped portion," communicates with the slit, and has a width wider than that of the slit". As shown in FIG. 10, in the die for forming a honeycomb structure according to still another embodiment of the present invention, a buffer portion 21 which is a space communicating with the end of the slit 9 "in the first bonded surface 10 side of the first plate-shaped portion 7" is provided on the cross section perpendicular to the slit 9. A width A of the buffer portion 21 is larger than that of the slit 9. The buffer portion 21 is formed along the end of the entire slit 9 "in the first bonded surface 10 side of the first plate-shaped portion 7." Since a die for forming a honeycomb structure 1H has the buffer portion 21, the forming raw material flowing from the back hole 5 can be easily widened inside the buffer portion 21 having a wide width before it flows into the slit 9 having a narrow width. In addition, it is possible to flow the forming raw material from the buffer portion 21 into the slit 9. As a result, it is possible to easily and uniformly flow the forming raw material to the entire slit 9. Furthermore, since the die for forming a honeycomb structure 1H has the buffer portion 21, it is possible to reduce a pressure loss when the forming raw material is extruded. The width A of the buffer portion 21 is preferably set to 0.1 to 4.0 mm, more preferably 0.2 to 3.0 mm, and particularly preferably 0.5 to 2.0 mm. If the width A of the buffer portion 21 is narrower than 0.1 mm, an effect of easily and uniformly flowing the forming raw material to the entire slit 9 may be degraded. If the width A of the buffer portion 21 is wider than 4.0 mm, the die may be easily broken during the extrusion. In addition, a depth B of the buffer portion 21 is preferably set to 0.05 to 5.0 mm, more preferably 0.1 to 4.0 mm, and particularly preferably 0.5 to 2.0 mm. If the depth B of the buffer portion 21 is shallower than 0.05 mm, an effect of easily and uniformly flowing the forming raw material to the entire slit 9 may be degraded. If the depth B of the buffer portion 21 is deeper than 5.0 mm, fabrication may become difficult. The depth of the buffer portion 21 is a length of the buffer portion 21 in the "thickness direction of the die for forming a honeycomb structure 1H." It is noted that the buffer portion 21 of the die for forming a honeycomb structure 1H has a rectangular shape on the cross section perpendicular to the slit 9. That is, a bottom portion 21a of the buffer portion 21 has a "flat shape (straight shape)" on the cross section perpendicular to the slit 9. In addition, a position of the buffer portion 21 "in an end 21b in the side opposite to the bottom portion 21a" in the thickness direction of the die for forming a honeycomb structure 1H is preferably set to the same position as the bottom portion 11b of the cavity 11 on the cross section perpendicular to the slit 9. "The end 21b in the side opposite to the bottom portion 21a" of the buffer portion 21 is the end of the buffer portion 21 "coupled to the slit 9." FIG. 10 is a cross-sectional view partially showing the cross section perpendicular to the slit 9 in the die for forming a honeycomb structure according to still another embodiment of the present invention (die for forming a honeycomb structure 1H).

In the die for forming a honeycomb structure according to the present invention, it is preferable that, while the buffer portion 21 is formed, the bottom portion 21a of the buffer portion 21 have an outwardly convex curved shape on the cross section perpendicular to the slit 9 as shown in FIG. 11. FIG. 11 is a cross-sectional view partially showing the cross section perpendicular to the slit 9 in the die for forming a honeycomb structure according to still another embodiment of the present invention (die for forming a honeycomb structure 1I).

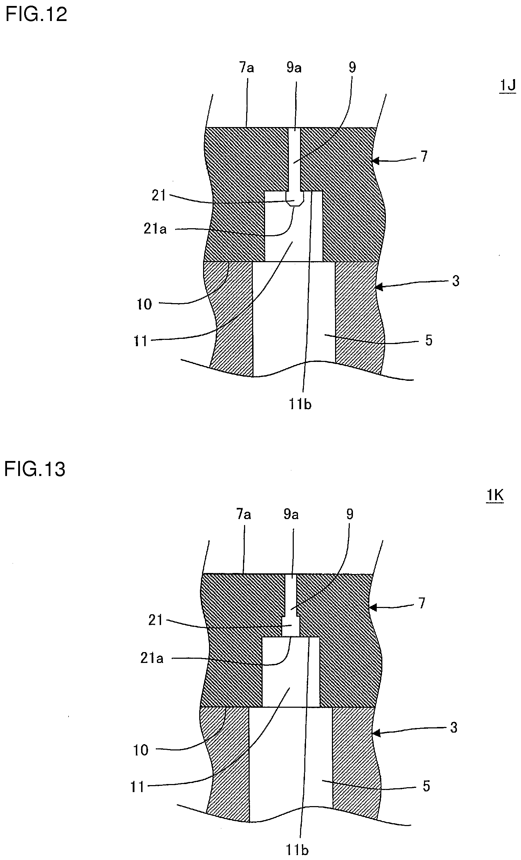

In the die for forming a honeycomb structure according to the present invention, it is preferable that, while the buffer portion 21 is formed, the buffer portion 21 have the following shape as shown in FIG. 12. Specifically, it is preferable that the buffer portion 21 be shaped such that "the bottom portion 21a has a 'flat shape (straight shape) of which corners are straightly chamfered (C-chamfered shape)'" on the cross section perpendicular to the slit 9. In addition, it is preferable that the bottom portion of the die for forming a honeycomb structure have a "V-shaped" buffer portion on the cross section perpendicular to the slit. FIG. 12 is a cross-sectional view partially showing a cross section perpendicular to the slit 9 in the die for forming a honeycomb structure according to still another embodiment of the present invention (die for forming a honeycomb structure 1J).

In the die for forming a honeycomb structure according to the present invention, while the buffer portion 21 is formed, the buffer portion 21 is preferably arranged as described below as shown in FIG. 13. Specifically, it is one of a preferable aspect that the bottom portion 21a of the buffer portion be formed (arranged) to overlap with the bottom portion 11b of the cavity 11 in the thickness direction of a die 1K for forming a honeycomb structure. FIG. 13 is a cross-sectional view partially illustrating a cross section perpendicular to the slit 9 in the die for forming a honeycomb structure according to still another embodiment of the present invention (die for forming a honeycomb structure 1K). The buffer portion 21 may, for example, have various shapes as described above for the buffer portions of the dies 1H to 1K for forming a honeycomb structure shown in FIGS. 10 to 13.

It is noted that, in the dies for forming a honeycomb structure 1C to 1K shown in FIGS. 5 to 13, the diameter of the open end of the cavity is smaller than the diameter of the open end of the back hole, and the open end of the cavity is arranged inside the open end of the back hole. In addition, in the dies for forming a honeycomb structure 1C to 1K, it is preferable, but not forming part of the invention, that the diameter of the open end of the cavity be larger than the diameter of the open end of the back hole, and the open end of the back hole be arranged inside the open end of the cavity. In addition, the slit 9 formed in the die for forming a honeycomb structure according to the present invention may have a shape obtained by combining two or more shapes of the same shapes the slits 9 of the dies for forming a honeycomb structure 1C to 1F shown in FIGS. 5 to 8. Furthermore, the cavity formed in the die for forming a honeycomb structure not according to the present invention may have a shape obtained by combining two or more shapes of the same shapes of the cavities 11 of the dies 1F to 1H for forming a honeycomb structure shown in FIGS. 8 to 10. Moreover, the buffer portion formed in the die for forming a honeycomb structure according to the present invention may have a shape obtained by combining two or more shapes of the same shapes of the buffer portions 21 of the dies for forming a honeycomb structure 1H to 1K shown in FIGS. 10 to 13.

### (2) Method of Manufacturing Die for Forming Honeycomb Structure:

Next, a description will be made for a method of manufacturing a die for forming a honeycomb structure according to an embodiment of the present invention. A method of manufacturing a die for forming a honeycomb structure according to this embodiment is a method of manufacturing a die for forming a honeycomb structure according to an embodiment of the present invention shown in FIGS. 1 to 4A (die for forming a honeycomb structure 1). It is noted that the die for forming a different honeycomb structure shown in FIG. 4B and not forming part of the invention may be manufactured similarly except that the size of the open end is different between the back hole and the cavity.

First, a plurality of back holes 5 are formed in the second plate-shaped member 3 having a disk shape formed of free cutting material (process (1)). Each condition such as the "diameter of the open end" of the back hole 5 is preferably set to the same condition as the preferable condition of the aforementioned die for forming a honeycomb structure according to an embodiment of the present invention.

Such back holes 5 may be formed, for example, preferably using various mechanical machining methods such as electrochemical machining (ECM), electrical discharge machining (EDM), laser machining, and mechanical machining such as drilling without any particular limitation. Out of these methods, the electrochemical machining (ECM) is preferably employed. Using the electrochemical machining (ECM), it is possible to efficiently form the back holes with high dimensional precision.

Then, the cavities 11 are formed on one surface of the first plate-shaped member 7 (first bonded surface 10) formed of tungsten carbide based cemented carbide (cemented carbide) (process (2)). One surface of the first plate-shaped member 7 is a surface of the side bonded to the second plate-shaped member 3 (first bonded surface 10) . The cavity 11 is formed such that the diameter d₁ of the cavity 11 is smaller than the diameter D₁ of the back hole 5 (refer to FIG. 4A). The number of cavities 11 is equal to the number of back holes 5, and the cavities 11 are arranged in the same positions as those of the back holes 5 when the first plate-shaped member 7 and the second plate-shaped member 3 are bonded to each other. The arrangement of the back holes 5 in the second plate-shaped member 3 and the arrangement of the cavities 11 in the first plate-shaped member 7 will be described below in detail. Specifically, the cavities 11 are arranged such that the open end 11a of the cavity is arranged inside the open end of the back hole when the first plate-shaped member 7 and the second plate-shaped member 3 are bonded to each other.

The cavity 11 may be formed, for example, preferably using various machining methods such as electrochemical machining (ECM), electrical discharge machining (EDM), laser machining, and mechanical machining such as drilling without any particular limitation. Out of these methods, the electrochemical machining (ECM) is preferably employed. Using the electrochemical machining (ECM), it is possible to efficiently form the back holes with high dimensional precision.

Then, while the second bonded surface 6 which is one surface of the second plate-shaped member 3 faces the first bonded surface 10 of the first plate-shaped member 7, the first plate-shaped member 7 and the second plate-shaped member 3 are stacked and the first plate-shaped member 7 and the second plate-shaped member 3 are bonded to each other (process (3)). As a result, the second bonded surface 6 of the second plate-shaped member 3 and the first bonded surface 10 of the first plate-shaped member 7 are bonded to each other.

It is preferable that a bonding material be interposed between the first plate-shaped member 7 and the second plate-shaped member 3 when the first plate-shaped member 7 and the second plate-shaped member 3 are stacked. In addition, it is preferable that the first plate-shaped member 7 and the second plate-shaped member 3 be bonded to each other while the bonding material is interposed between the first plate-shaped member 7 and the second plate-shaped member 3. The bonding material preferably has a film shape, a sheet shape, a plate shape, and the like.

The bonding material is preferably formed of, for example, metal or alloy containing at least one selected from a group consisting of copper (Cu), silver (Ag), gold (Au), nickel (Ni), and aluminum (Al). In addition, it is preferable that the bonding material penetrate into the inside of at least one of the first plate-shaped portion 7 and the second plate-shaped portion 3 when pressing (hot pressing) while heating are performed while the bonding material is interposed between the first plate-shaped member 7 and the second plate-shaped member 3. If the bonding material is configured in this manner, it is possible to improve bonding between the first plate-shaped portion 7 and the second plate-shaped portion 3.

The bonding material may further contain an additive such as palladium (Pd), silicon (Si), tin (Sn), cobalt (Co), phosphorus (P), manganese (Mn), zinc (Zn), and boron (B). If such an additive is further contained, it is possible to lower a bonding temperature and improve reliability.

In order to stack and bond the first plate-shaped member 7 and the second plate-shaped member 3, a stack of the first plate-shaped member 7 and the second plate-shaped member 3 is preferably bonded through hot pressing. A temperature of the hot pressing is preferably set to 900 to 1200°C, and more preferably 1000 to 1150°C. Heating at such a temperature enables excellent bonding between the first plate-shaped member 7 and the second plate-shaped member 3 and prevents degradation of the strength of the second plate-shaped member 3. In addition, a hot pressing time is preferably set to 1 minute to 1 hour, and more preferably 10 to 45 minutes. If the hot pressing time is shorter than 1 minute, it may be difficult to bond the first plate-shaped member 7 and the second plate-shaped member 3 with a strong bonding strength. If the hot pressing time is longer than 1 hour, base materials of the first and second plate-shaped members may be easily deteriorated. A pressure of the hot pressing may be appropriately determined depending on shapes, sizes, and the like of the first plate-shaped member 7 and second plate-shaped member 3. For example, the pressure is preferably set to 0.01 to 100 MPa, and more preferably 0.1 to 10 MPa. As a hot pressing machine, for example, a FVHP-R manufactured by "Fujidempa Kogyo Co., Ltd." may be employed.

Then, slits 9 communicating with the cavities 11 are formed from "the surface opposite to the first bonded surface" (surface side) of the first plate-shaped portion 7 so that the die for forming a honeycomb structure 1 is obtained (refer to FIGS. 1 to 4A) (process (4)). It can be said that the slit 9 communicates with the back hole 5 through the cavity 11 since it also communicates with the "cavity 11 communicating with the back hole 5." As a method of forming slits in the first plate-shaped member, any one of methods known in the art such as grinding using a diamond grinding wheel may be appropriately employed without a particular limitation. In the die for forming a honeycomb structure 1 of FIGS. 1 to 4A, a planar shape (slit formation pattern) of a cell block 13 formed by the slits 9 is rectangular. Each condition of the slit such as the slit formation pattern is preferably set to the same condition as that described in relation to the aforementioned die for forming a honeycomb structure according to an embodiment of the present invention.

In order to form the slit 9 in the die for forming a honeycomb structure 1C of FIG. 5, for example, a diamond grinding wheel having a head (outer circumference) having an "outwardly convex curved shape" is preferably employed. In addition, in order to form the slit 9 in the die for forming a honeycomb structure 1D of FIG. 6, for example, a diamond grinding wheel having a "V-shaped" head (outer circumference) is preferably employed. Furthermore, in order to form the slit 9 in the die for forming a honeycomb structure 1E of FIG. 7, for example, a diamond grinding wheel having a generally V-shaped cross section is preferably employed.

The buffer portions 21 formed in the dies for forming a honeycomb structure 1H to 1K of FIGS. 10 to 13 are preferably formed through the method described below. For example, a method of forming the buffer portion 21 from the slit of the first plate-shaped member using a wire electric discharge machine is preferably employed. In addition, the slit may be formed from the surface side of the first plate-shaped member using a wire electric discharge machine. In this case, the buffer portion having a wide hole width is formed in the head of the slit. When the buffer portion is formed, a shape of the buffer portion may be adjusted depending on a wire diameter, a fabricating condition, a wiring locus, and the like. Examples

Hereinafter, examples of the present invention will be described in more detail. Note that such examples are not intended to limit the invention.

### (Example 1)

First, a back hole (through hole) having a diameter of 2 mm was formed in a plate-shaped member (second plate-shaped member) formed of stainless steel (SUS303) through electrical discharge machining (EDM) . As a result, the "diameter of the open end of the back hole on the second bonded surface" became 2 mm. The second plate-shaped member had a disk shape having a diameter of 200 mm. In addition, the second plate-shaped member had a thickness of 50 mm. The area where the back hole is formed (back hole formation area) had a circular shape centered at the center of the first plate-shaped member, and had a diameter of 150 mm. The back hole had a pitch of 5 mm.

Then, a cavity (hollow) was formed in the surface (first bonded surface) side of the first plate-shaped member formed of tungsten carbide based cemented carbide through electrochemical machining (ECM). The cavity had a diameter of 1.5 mm and a depth of 5 mm. As a result, the open end of the cavity on the first bonded surface had a diameter of 1.5 mm. In addition, the first plate-shaped member had a disk shape having a diameter of 200 mm. Furthermore, the first plate-shaped member had a thickness of 10 mm. The tungsten carbide based cemented carbide as a material of the first plate-shaped member was obtained by mixing tungsten carbide and cobalt of 2 mass%.

Then, the first and second plate-shaped members were stacked by interposing a bonding material therebetween. In order to stack the first plate-shaped member and second plate-shaped member, they were arranged such that the first bonded surface of the first plate-shaped member faces the second bonded surface of the second plate-shaped member. As the bonding material, an film-shaped aluminum (Al) having a thickness of 0.01 mm was employed.

Then, the stack of the first plate-shaped member and second plate-shaped member was hot-pressed under a pressure of 0.5 MPa at a temperature of 900°C for 0.5 hours to bond the first plate-shaped member and second plate-shaped member to each other. In the hot pressing, it is preferable that "the stack of the first plate-shaped member and second plate-shaped member" be interposed and pressed using a "plate-shaped pressing member" having a size larger than those of the first plate-shaped member and second plate-shaped member. As a result, it is possible to uniformly press the stack. It is noted that the "hot pressing" means that "pressing while heating."

The assembly obtained by "bonding the first plate-shaped member and second plate-shaped member" in this manner was cooled to an ambient temperature, and the slits were formed in the first plate-shaped member, so that the die for forming a honeycomb structure having the structure illustrated in FIGS. 1 to 4A was obtained. The slits were formed in a lattice shape communicating with the cavities using a diamond grinding wheel. The slit had a width of 0.5 mm and a pitch of 5 mm. The slits were formed such that the cavities are positioned in the intersection between the slits. In the die for forming a honeycomb structure obtained in this manner, the open end of the cavity on the first bonded surface was arranged inside the open end of the back hole on the second bonded surface. A "formation test" was performed for the obtained die for forming a honeycomb structure as described below. A result of the formation test is shown in Table 1.

### (Formation test)

As a ceramic raw material, a mixture of alumina, talc, and kaolin is used. An organic binder is mixed with this mixture, water is added, and kneading is performed, so that kneaded material (formation raw material) is prepared using a vacuum pugmill. The obtained kneaded material is formed using an extrusion machine installed with the die for forming a honeycomb structure to obtain a cylindrical honeycomb formed body. Then, the obtained honeycomb formed body is dried using a dielectric drier and is then fired at a high temperature using a firing furnace to obtain a honeycomb structure. Through this method, 100 honeycomb structures are prepared. A visual inspection is performed for the obtained honeycomb structures on whether or not there is a "distortion" in the cell. A honeycomb structure having no "distortion" is classified as a quality product, and a honeycomb structure having a "distortion" is classified as a defective product, so that a yield of the quality product is calculated.

**[Table 1]**

| | Yield (%) |
|---|---|
| Example 1 | 99 |
| Example 2 | 99 |
| Comparative Example 1 | 0 |

### (Example 2)

A die for forming a honeycomb structure was prepared as in Example 1 except that the diameter of the back hole of the second plate-shaped portion is smaller than the diameter of the cavity of the first plate-shaped portion. It is noted that the open end of the back hole on the second bonded surface was arranged inside the open end of the cavity on the first bonded surface. The open end of the cavity on the first bonded surface had a diameter of 2.0 mm. In addition, the cavity had a depth of 5 mm. In addition, the open end of the back hole on the second bonded surface had a diameter of 1.5 mm. The "formation test" was performed for the obtained die for forming a honeycomb structure. A result of the test is shown in Table 1.

### (Comparative Example 1)

A die for forming a honeycomb structure was prepared as in Example 1 except that the back hole of the second plate-shaped member has the same diameter as that of the cavity of the first plate-shaped member. Both the open end of the cavity on the first bonded surface and the open end of the back hole on the second bonded surface had a diameter of 2.0 mm. In the obtained die for forming a honeycomb structure, plate-shaped member the first and second plate-shaped member were bonded to each other such that the "outer circumference of the open end of the cavity on the first bonded surface" and the "outer circumference of the open end of the back hole of the second bonded surface" intersect with each other. That is, the first plate-shaped member and second plate-shaped member were bonded while the back holes and the cavities are deviated from each other.

Referring to Table 1, it is recognized that excellent formability is obtained if a honeycomb structure is formed using the dies for forming a honeycomb structure in Examples 1 and 2. Meanwhile, in the die for forming a honeycomb structure of Comparative Example 1, the first plate-shaped member and second plate-shaped member are bonded to each other while the back hole and the cavity are deviated. Therefore, it was revealed that a distortion is easily generated in the obtained honeycomb-structured formed body, and a yield is degraded in the manufacturing of the honeycomb structure.

### Industrial Applicability

The die for forming a honeycomb structure according to the present invention may be employed in manufacturing of a honeycomb structure used in a catalyst carrier, a filter that catches fine particles in an exhaust gas, and the like.

### Description of Reference Numerals

1, 1A, 1B, 1C, 1D, 1E, 1F, 1G, 1H, 1I, 1J, 1K: die for forming honeycomb structure, 3: second plate-shaped portion (second plate-shaped member), 5: back hole, 5a: open end of back hole, 6: second bonded surface, 7: first plate-shaped portion (first plate-shaped member), 7a: surface (surface of first plate-shaped portion), 9: slit, 9a: open end of slit, 9b: bottom portion of slit, 10: first bonded surface, 11: cavity, 11a: open end of cavity, 11b: bottom portion, 13: cell block, 21: buffer portion, 21a: bottom portion of buffer portion, 21b: end (end of the buffer portion in the side opposite to the bottom portion), d₁: diameter of open end of cavity, D₁: diameter of open end of back hole, h: depth of cavity, A: width of buffer portion, B: depth of buffer portion.

## Claims

1. A die (1) for forming a honeycomb structure, comprising:
a second plate-shaped portion (3) having a second bonded surface (6), where a back hole (5) for introducing a forming raw material is formed; and
a first plate-shaped portion (7) that has a first bonded surface (10) and is formed of tungsten carbide based cemented carbide, where a cavity (11) communicating with the back hole (5) is formed in the first bonded surface (10) side, and a slit (9) communicating with the cavity (5) to form a forming raw material is formed,
wherein the second plate-shaped portion (3) is formed of a material containing at least one selected from a group consisting of iron, steel, aluminum alloy, copper alloy, titanium alloy, and nickel alloy,
the first plate-shaped portion (7) is arranged on the second plate-shaped portion (3) such that the first bonded surface (10) comes into contact with the second bonded surface (6),
an open end (11a) of the cavity (11) on the first bonded surface (10) has a diameter different from that of an open end (5a) of the back hole (5) on the second bonded surface (6) and a bottom portion (11b) as a head edge of the cavity (11) has a flat shape on a cross section perpendicular to a top surface of the first plate-shaped portion (7) at an end opposite to the open end (11a) of the cavity (11) such that the flat shape of the bottom portion (11b) extends to the cavity sidewall and is parallel to the first bonded surface (10) of the first plate-shaped portion (7), and
the open end (11a) of the cavity (11) on the first bonded surface (10) is arranged inside the open end (5a) of the back hole (5) on the second bonded surface (6);
wherein the diameter (D₁) of the open end (5a) of the back hole (5) on the second bonded surface (6) is larger than the diameter (d₁) of the open end (11a) of the cavity (11) on the first bonded surface (10), and the diameter of the open end (5a) of the back hole (5) on the second bonded surface (6) is 1.01 to 1.50 times of the diameter of the open end (11a) of the cavity (11) on the first bonded surface (10).

2. The die (1) for forming a honeycomb structure according to claim 1, wherein the cavity (11) has a depth (h) of 0.1 to 90 mm.

3. The die (1) for forming a honeycomb structure according to claim 1 or claim 2, further comprising a buffer portion (21) which is a space that is formed along an end of the slit (9) in the first bonded surface (10) side of the first plate-shaped portion (7), communicates with the slit (9), and has a width larger than that of the slit (9).

4. The die (1) for forming a honeycomb structure according to any one of claims 1 to 3, wherein a bottom portion (9b) of the slit (9) on a side of the first bonded surface (10) has a flat shape having straightly chamfered corners, an outwardly convex curved shape, or an outwardly convex V-shape on a cross section perpendicular to the slit (9) .

5. The die (1) for forming a honeycomb structure according to claim 3, wherein a bottom portion (21a) of the buffer portion (21) on a side of the first bonded surface (10) has a flat shape, a flat shape having straightly chamfered corners, an outwardly convex curved shape, or a V-shape on a cross section perpendicular to the slit (9).

6. A method of manufacturing a die (1) for forming a honeycomb structure, comprising:
forming a plurality of back holes (5) in a second plate-shaped member (3) formed of a material containing at least one selected from a group consisting of iron, steel, aluminum alloy, copper alloy, titanium alloy, and nickel alloy;
forming a plurality of cavities (11) in a first bonded surface (10) of a first plate-shaped member (7) such that each cavity (11) has an open end (11a) on the first bonded surface (10) and a bottom portion (11b) as a head edge of the cavity (11) has a flat shape on a cross section perpendicular to a top surface of the first plate-shaped member (7) at an end opposite to the open end (11a) of the cavity (11), wherein the flat shape of the bottom portion (11b) extends to the cavity sidewall and is parallel to the first bonded surface (10) of the first plate-shaped member (7), and the plurality of cavities (11) have a diameter different from that of the back holes (5) and communicate with the back holes (5) when the second plate-shaped member (3) is bonded on the first bonded surface (10) of the first plate-shaped member (7) formed of tungsten carbide based cemented carbide;
stacking the first plate-shaped member (7) and the second plate-shaped member (3) and bonding the first plate-shaped member (7) and the second plate-shaped member (3) to each other while a second bonded surface (6) which is one surface of the second plate-shaped member (3) having the back holes (5) faces the first bonded surface (10) of the first plate-shaped member (7) having the cavities (11); and
forming slits (9) communicating with the cavities (11) from a surface side of the first plate-shaped member (7) to manufacture a die (1) for forming a honeycomb structure;
wherein the diameter (D₁) of the open end (5a) of the back hole (5) on the second bonded surface (6) is larger than the diameter (d₁) of the open end (11a) of the cavity (11) on the first bonded surface (10), and the diameter of the open end (5a) of the back hole (5) on the second bonded surface (6) is 1.01 to 1.50 times of the diameter of the open end (11a) of the cavity (11) on the first bonded surface (10).

## Patentansprüche

1. Formwerkzeug (1) zur Ausbildung einer Wabenstruktur, umfassend:
einen zweiten plattenförmigen Abschnitt (3) mit einer zweiten Verbindungsfläche (6), in der ein rückseitiges Loch (5) zum Einbringen eines Formungsrohmaterials ausgebildet ist; und
einen ersten plattenförmigen Abschnitt (7), der eine erste Verbindungsfläche (10) aufweist und aus Wolframkarbid-basiertem Hartmetall gebildet ist, wobei ein mit dem rückseitigen Loch (5) kommunizierender Hohlraum (11) in der ersten Verbindungsflächen (10) -Seite ausgebildet ist, und ein mit dem Hohlraum (5) zum Ausbilden eines Formungsrohmaterials kommunizierender Schlitz (9) ausgebildet ist,
wobei der zweite plattenförmige Abschnitt (3) aus einem Material gebildet ist, das mindestens eines, das aus einer aus Eisen, Stahl, Aluminiumlegierung, Kupferlegierung, Titanlegierung und Nickellegierung bestehenden Gruppe ausgewählt ist, enthält,
wobei der erste plattenförmige Abschnitt (7) auf dem zweiten plattenförmigen Abschnitt (3) derart angeordnet ist, dass die erste Verbindungsfläche (10) in Kontakt mit der zweiten Verbindungsfläche (6) ist,
wobei ein offenes Ende (11a) des Hohlraums (11) auf der ersten Verbindungsfläche (10) einen Durchmesser aufweist, der sich von demjenigen eines offenen Endes (5a) des rückseitigen Lochs (5) auf der zweiten Verbindungsfläche (6) unterscheidet, und ein Unterseitenabschnitt (11b) als eine Kopfkante des Hohlraums (11) eine flache Form auf einem zu einer Oberseitenfläche des ersten plattenförmigen Abschnitts (7) senkrechten Querschnitt, und zwar an einem dem offenen Ende (11a) des Hohlraums (11) gegenüberliegenden Ende aufweist, sodass sich die flache Form des Unterseitenabschnitts (11b) zur Hohlraumseitenwand erstreckt und parallel zur ersten Verbindungsfläche (10) des ersten plattenförmigen Abschnitts (7) ist, und
wobei das offene Ende (11a) des Hohlraums (11) auf der ersten Verbindungsfläche (10) im Inneren des offenen Endes (5a) des rückseitigen Lochs (5) auf der zweiten Verbindungsfläche (6) angeordnet ist,
wobei der Durchmesser (D₁) des offenen Endes (5a) des rückseitigen Lochs (5) auf der zweiten Verbindungsfläche (6) größer als der Durchmesser (d₁) des offenen Endes (11a) des Hohlraums (11) auf der ersten Verbindungsfläche (10) ist, und der Durchmesser des offenen Endes (5a) des rückseitigen Lochs (5) auf der zweiten Verbindungsfläche (6) 1,01 bis 1,50 Mal der Durchmesser des offenen Endes (11a) des Hohlraums (11) auf der ersten Verbindungsfläche (10) ist.

2. Formwerkzeug (1) zur Ausbildung einer Wabenstruktur gemäß Anspruch 1, wobei der Hohlraum (11) eine Tiefe (h) von 0,1 bis 90 mm aufweist.

3. Formwerkzeug (1) zur Ausbildung einer Wabenstruktur gemäß Anspruch 1 oder Anspruch 2, ferner umfassend einen Pufferabschnitt (21), der ein Raum ist, der entlang eines Endes des Schlitzes (9) in der ersten Verbindungsflächen (10) -Seite des ersten plattenförmigen Abschnitts (7) ausgebildet ist, mit dem Schlitz (9) kommuniziert und eine Breite aufweist, die größer als die des Schlitzes (9) ist.

4. Formwerkzeug (1) zur Ausbildung einer Wabenstruktur gemäß einem der Ansprüche 1 bis 3, wobei ein Unterseitenabschnitt (9b) des Schlitzes (9) auf einer Seite der ersten Verbindungsfläche (10) eine flache Form mit geradlinig abgeschrägten Ecken, eine nach außen konvex gekrümmte Form oder eine nach außen konvexe V-Form auf einem zum Schlitz (9) senkrechten Querschnitt aufweist.

5. Formwerkzeug (1) zur Ausbildung einer Wabenstruktur gemäß Anspruch 3, wobei ein Unterseitenabschnitt (21a) des Pufferabschnitts (21) auf einer Seite der ersten Verbindungsfläche (10) eine flache Form, eine flache Form mit geradlinig abgeschrägten Ecken, eine nach außen konvex gekrümmte Form oder eine V-Form auf einem zum Schlitz (9) senkrechten Querschnitt aufweist.

6. Verfahren zur Herstellung eines Formwerkzeugs (1) zur Ausbildung einer Wabenstruktur, umfassend:
Ausbilden einer Vielzahl von rückseitigen Löchern (5) in einem zweiten plattenförmigen Teil (3), das aus einem Material gebildet ist, das mindestens eines, das aus einer aus Eisen, Stahl, Aluminiumlegierung, Kupferlegierung, Titanlegierung und Nickellegierung bestehenden Gruppe ausgewählt ist, enthält;
Ausbilden einer Vielzahl von Hohlräumen (11) in einer ersten Verbindungsfläche (10) eines ersten plattenförmigen Teils (7), sodass jeder Hohlraum (11) ein offenes Ende (11a) auf der ersten Verbindungsfläche (10) aufweist, und ein Unterseitenabschnitt (11b) als eine Kopfkante des Hohlraums (11) eine flache Form auf einem zu einer Oberseitenfläche des ersten plattenförmigen Teils (7) senkrechten Querschnitt, und zwar an einem dem offenen Ende (11a) des Hohlraums (11) gegenüberliegenden Ende aufweist, wobei sich die flache Form des Unterseitenabschnitts (11b) zur Hohlraumseitenwand erstreckt und parallel zur ersten Verbindungsfläche (10) des ersten plattenförmigen Teils (7) ist, und die Vielzahl von Hohlräumen (11) einen Durchmesser aufweist, der sich von demjenigen der rückseitigen Löcher (5) unterscheidet, und mit den rückseitigen Löchern (5) kommuniziert, wenn das zweite plattenförmige Teil (3) auf der ersten Verbindungsfläche (10) des aus Wolframkarbid-basiertem Hartmetall gebildeten, ersten plattenförmigen Teils (7) haftschlüssig verbunden ist;
Stapeln des ersten plattenförmigen Teils (7) und des zweiten plattenförmigen Teils (3) und haftschlüssiges Verbinden des ersten plattenförmigen Teils (7) und des zweiten plattenförmigen Teils (3) miteinander, wobei eine zweite Verbindungsfläche (6), die eine Oberfläche des zweiten plattenförmigen Teils (3) mit den rückseitigen Löchern (5) ist, der ersten Verbindungsfläche (10) des ersten plattenförmigen Teils (7) mit den Hohlräumen (11) zugewandt ist; und
Ausbilden von Schlitzen (9), die mit den Hohlräumen (11) von einer Oberflächenseite des ersten plattenförmigen Teils (7) kommunizieren, um ein Formwerkzeug (1) zur Ausbildung einer Wabenstruktur herzustellen;
wobei der Durchmesser (D₁) des offenen Endes (5a) des rückseitigen Lochs (5) auf der zweiten Verbindungsfläche (6) größer als der Durchmesser (d₁) des offenen Endes (11a) des Hohlraums (11) auf der ersten Verbindungsfläche (10) ist, und der Durchmesser des offenen Endes (5a) des rückseitigen Lochs (5) auf der zweiten Verbindungsfläche (6) 1,01 bis 1,5 Mal der Durchmesser des offenen Endes (11a) des Hohlraums (11) auf der ersten Verbindungsfläche (10) ist.

## Revendications

1. Filière (1) pour former une structure en nid d'abeilles, comprenant :
une seconde partie en forme de plaque (3) ayant une seconde surface reliée (6), où est formé un trou arrière (5) pour introduire une matière première de formage; et
une première partie en forme de plaque (7) qui a une première surface reliée (10) et est formée avec un carbure cémenté à base de carbure de tungstène, où une cavité (11) communiquant avec le trou arrière (5) est formée du côté de la première surface reliée (10), et une fente (9) communiquant avec la cavité (5) afin de former une matière première de formage, est formée,
dans laquelle la seconde partie en forme de plaque (3) est formée avec un matériau contenant au moins un matériau sélectionné dans un groupe comprenant le fer, l'acier, un alliage d'aluminium, un alliage d cuivre, un alliage de titane et un alliage de nickel,
la première partie en forme de plaque (7) est agencée sur la seconde partie en forme de plaque (3) de sorte que la première surface reliée (10) vient en contact avec la seconde surface reliée (6),
une extrémité ouverte (11a) de la cavité (11) sur la première surface reliée (10) a un diamètre différent de celui d'une extrémité ouverte (5a) du trou arrière (5) sur la seconde surface reliée (6) et une partie inférieure (11b) en tant que bord de tête de la cavité (11) a une forme plate sur une section transversale perpendiculaire à une surface supérieure de la première partie en forme de plaque (7) au niveau d'une extrémité opposée à l'extrémité ouverte (11a) de la cavité (11) de sorte que la forme plate de la partie inférieure (11b) s'étend jusqu'à la paroi latérale de cavité et est parallèle à la première surface reliée (10) de la première partie en forme de plaque (7), et
l'extrémité ouverte (11a) de la cavité (11) sur la première surface reliée (10) est agencée à l'intérieur de l'extrémité ouverte (5a) du trou arrière (5) sur la seconde surface reliée (6) ;
dans laquelle le diamètre (D₁) de l'extrémité ouverte (5a) du trou arrière (5) sur la seconde surface reliée (6) est supérieur au diamètre (d₁) de l'extrémité ouverte (11a) de la cavité (11) sur la première surface reliée (10), et le diamètre de l'extrémité ouverte (5a) du trou arrière (5) sur la seconde surface reliée (6) représente de 1,01 à 1,50 fois le diamètre de l'extrémité ouverte (11a) de la cavité (11) sur la première surface reliée (10).

2. Filière (1) pour former une structure en nid d'abeilles selon la revendication 1, dans laquelle la cavité (11) a une profondeur (h) de 0,1 à 90 mm.

3. Filière (1) pour former une structure en nid d'abeilles selon la revendication 1 ou la revendication 2, comprenant en outre une partie tampon (21) qui est un espace qui est formé le long d'une extrémité de la fente (9) du côté de la première surface reliée (10) de la première partie en forme de plaque (7), communique avec la fente (9), et a une largeur supérieure à celle de la fente (9) .

4. Filière (1) pour former une structure en nid d'abeilles selon l'une quelconque des revendications 1 à 3, dans laquelle une partie inférieure (9b) de la fente (9) sur un côté de la première surface reliée (10) a une surface plate ayant des coins chanfreinés en ligne droite, une forme incurvée convexe vers l'extérieur ou une forme en V convexe vers l'extérieur sur une section transversale perpendiculaire à la fente (9).

5. Filière (1) pour former une structure en nid d'abeilles selon la revendication 3, dans laquelle une partie inférieure (21a) de la partie tampon (21) d'un côté de la première surface reliée (10) a une forme plate, une forme plate ayant des coins chanfreinés en ligne droite, une forme incurvée convexe vers l'extérieur ou une forme en V sur une section transversale perpendiculaire à la fente (9).

6. Procédé pour fabriquer une filière (1) afin de former une structure en nid d'abeilles comprenant les étapes consistant à :
former une pluralité de trous arrière (5) dans un second élément en forme de plaque (3) formé avec un matériau contenant au moins un matériau sélectionné dans un groupe comprenant le fer, l'acier, un alliage d'aluminium, un alliage de cuivre, un alliage de titane et un alliage de nickel ;
former une pluralité de cavités (11) dans une première surface reliée (10) d'un premier élément en forme de plaque (7) de sorte que chaque cavité (11) a une extrémité ouverte (11a) sur la première surface reliée (10) et une partie inférieure (11b) en tant que bord de tête de la cavité (11) a une forme plate sur une section transversale perpendiculaire à une surface supérieure du premier élément en forme de plaque (7) au niveau d'une extrémité opposée à l'extrémité ouverte (11a) de la cavité (11), dans lequel la forme plate de la partie inférieure (11b) s'étend jusqu'à la paroi latérale de cavité et est parallèle à la première surface reliée (10) du premier élément en forme de plaque (7), et la pluralité de cavités (11) ont un diamètre différent de celui des trous arrière (5) et communiquent avec les trous arrière (5) lorsque le second élément en forme de plaque (3) est relié sur la première surface reliée (10) du premier élément en forme de plaque (7) formé à partir d'un carbure cémenté à base de carbure de tungstène ;
empiler le premier élément en forme de plaque (7) et le second élément en forme de plaque (3) et relier le premier élément en forme de plaque (7) et le second élément en forme plaque (3) entre eux alors qu'une seconde surface reliée (6) qui est une surface du second élément en forme de plaque (3) ayant les trous arrière (5) fait face à la première surface reliée (10) du premier élément en forme de plaque (7) comportant les cavités (11) ; et
former des fentes (9) communiquant avec les cavités (11) à partir d'un côté de surface du premier élément en forme de plaque (7) afin de fabriquer une filière (1) pour former une structure en nid d'abeilles ;
dans lequel le diamètre (D₁) de l'extrémité ouverte (5a) du trou arrière (5) sur la seconde surface reliée (6) est supérieur au diamètre (d₁) de l'extrémité ouverte (11a) de la cavité (11) sur la première surface reliée (10) et le diamètre de l'extrémité ouverte (5a) du trou arrière (5) sur la seconde surface reliée (6) représente de 1,01 à 1,50 fois le diamètre de l'extrémité ouverte (11a) de la cavité (11) sur la première surface reliée (10).
